# EUROPÄISCHE PATENTSCHRIFT

(11) **EP 0 885 767 B1**
(45) Veröffentlichungstag und Bekanntmachung des Hinweises auf die Patenterteilung: **07.08.2002**
(21) Anmeldenummer: 98108688.7
(22) Anmeldetag: 13.05.1998
(51) Int. Cl.: B60K 41/06, B60K 41/04

(54) **Verfahren zur Beeinflussung des Drehmoments einer Brennkraftmaschine in Abhängigkeit vom benötigten Getriebeingangsmoment**
Method for regulating engine output torque according to the required transmission input torque
Système pour la régulation du couple moteur selon le couple d'entrée requis par la transmission

(30) Priorität: 20.06.1997 DE 19726194
(43) Veröffentlichungstag der Anmeldung: 23.12.1998
(73) Patentinhaber: Bayerische Motoren Werke Aktiengesellschaft, 80788 München (DE)
(72) Erfinder: Stocker, Franz, 82229 Seefeld (DE); Meisberger, Dieter, 81476 München (DE); Bock, Christan, 81925 München (DE)

(56) Entgegenhaltungen:
- DE-A- 2 935 916
- DE-A- 3 830 938
- DE-A- 4 037 092
- US-A- 5 251 513
- US-A- 5 484 351
- US-A- 5 498 217

## Beschreibung

Die Erfindung bezieht sich auf ein Verfahren zur Beeinflussung des Drehmoments einer Brennkraftmaschine bei einem Kraftfahrzeug mit einem automatischen Stufengetriebe, mit einem hydrodynamischen Wandler, mit einer Getriebeölpumpe, mit einem elektronischen Brennkraftmaschinensteuergerät und mit einem elektronischen Getriebesteuergerät entsprechend den Maßnahmen des Oberbegriffs von Anspruch 1, welche aus der US-A-5 484 351 bekannt sind. Dort wird auch die Getriebeöltemperatur berücksichtigt.

Ein weiteres Verfahren ist beispielsweise aus der DE 29 35 916 C2 im Zusammenhang mit einem üblichen Aufbau eines Kraftfahrzeugs, das mit einem elektronisch gesteuerten Automatikgetriebe ausgestattet ist, bekannt. Zur Funktionsweise elektronisch gesteuerter Automatikgetriebe mit hydrodynamischem Wandler wird beispielsweise auf die Seiten 460 bis 470 des Kraftfahrtechnischen Taschenbuchs der Fa. Bosch (20. Auflage, VDI-Verlag, 1987) verwiesen. Bekannte elektronisch gesteuerte Automatikgetriebe weisen bisher zur Erhöhung der Schaltqualität während eines Gangwechsels ein Verfahren zur Beeinflussung des Drehmoments einer Brennkraftmaschine in Form einer Reduzierung des Drehmoments auf. Ein derartiges Verfahren zur Beeinflussung des Drehmoments einer Brennkraftmaschine setzt voraus, daß ein elektronisches Brennkraftmaschinensteuergerät als Partner für ein elektronisches oder auch hydraulisches Getriebesteuergerät vorhanden ist. Ein derartiges bekanntes Verfahren zur Beeinflussung des Drehmoments einer Brennkraftmaschine hat zum Ziel, das Drehmoment der Brennkraftmaschine (Motormoment) während der Gangwechsel nach Größe und zeitlichem Verlauf derart zu reduzieren, daß der Schaltruck möglichst klein bleibt und die Synchronisation des Getriebes unterstützt wird. Eine derartige Reduzierung des Drehmoments einer Brennkraftmaschine wird im Zusammenhang mit bekannten elektronischen Getriebesteuerungen auch als Motoreingriff bezeichnet (vgl. z. B. auch ATZ-Artikel "Elektronische Getriebesteuerung von Bosch", 1992, Seite 424 ff.). Bisher wird dieser sogenannte Motoreingriff durch ein digitales Signal, d. h. durch einen Wechsel von einem High- auf ein Low-Signal oder umgekehrt, vom Getriebesteuergerät als Momentenreduzierungs-Anforderung an das Brennkraftmaschinensteuergerät übermittelt. Das Ausmaß der Reduzierung des Drehmoments wird jedoch im Brennkraftmaschinensteuergerät selbst, insbesondere in Abhängigkeit vom momentanen Motormoment, berechnet.

Ein weiteres Verfahren zur Beeinflussung des Drehmoments einer Brennkraftmaschine ist ebenfalls im Zusammenhang mit elektronisch gesteuerten Automatikgetrieben insbesondere bei einem Anfahrvorgang bekannt, bei dem das Brennkraftmaschinensteuergerät in etwa die Drehmomentenaufnahme des hydrodynamischen Wandlers (Wandlermoment) abschätzt und die Beeinflussung des Drehmoments der Brennkraftmaschine in Form einer Erhöhung des Drehmoments zum Überwinden des Verlustmoments durch das Wandlermoment vorsteuert.

Die bisher bekannten Verfahren zur Beeinflussung des Drehmoments einer Brennkraftmaschine durch ein Brennkraftmaschinensteuergerät in Zusammenhang mit einem elektronisch gesteuerten Automatikgetriebe weisen die Gemeinsamkeit auf, daß die notwendige Beeinflussung des Drehmoments der Brennkraftmaschine ausschließlich in Abhängigkeit von Betriebsgrößen des Brennkraftmaschinensteuergeräts vorgegeben wird, obwohl sich die Beeinflussung des Drehmoments der Brennkraftmaschine auf den gesamten Antriebsstrang auswirkt. Auch hängt die notwendige Beeinflussung des Drehmoments der Brennkraftmaschine zum Erreichen eines optimalen Fahrkomforts maßgeblich von Betriebsgrößen des Automatikgetriebes, einschließlich des hydrodynamischen Wandlers und der Getriebeölpumpe, ab.

Es ist daher Aufgabe der Erfindung, ein Verfahren zur Beeinflussung des Drehmoments der Brennkraftmaschine eingangs genannter Art derart zu verbessern, daß ein optimaler Fahrkomfort erreicht wird und die Signale vorhandener elektronischer Steuergeräte hierfür optimal ausgenutzt werden.

Diese Aufgabe wird durch die kennzeichnenden Merkmale des Patentanspruchs gelöst.

Erfindungsgemäß ermittelt das elektronische Getriebesteuergerät in Abhängigkeit von ihm vorliegenden Eingangssignalen ein Getriebeeingangsmoment als Summe eines Wandlermoments und eines Getriebeölpumpenmoments und übermittelt dieses Getriebeeingangsmoment in Form eines durch das Brennkraftmaschinensteuergerät zu kompensierenden Verlustmoments als Eingangssignal an das Brennkraftmaschinensteuergerät.

Vorzugsweise wird das Wandlermoment in Abhängigkeit von der Turbinendrehzahl des Wandlers, der Pumpendrehzahl des Wandlers und der Getriebeöltemperatur, ermittelt. Diese drei Größen liegen üblicherweise als Eingangssignale am Getriebesteuergerät an. Das Getriebeölpumpenmoment wird vorzugsweise in Abhängigkeit von den Eingangssignalen Motordrehzahl (= Drehzahl der Brennkraftmaschine), Getriebeölpumpendruck und Getriebeöltemperatur berechnet. Ergänzend wird darauf hingewiesen, daß die Pumpendrehzahl des Wandlers identisch mit der Motordrehzahl und der Drehzahl der Getriebeölpumpe ist.

Das Getriebeeingangsmoment als Summe des Wandlermoments und des Getriebeölpumpenmoments wird vorzugsweise als Momentenwert über eine elektrische Signalleitung oder über einen elektronischen Datenbus an das Brennkraftmaschinensteuergerät übermittelt. Dieses Getriebeeingangsmoment wird als Verlustmoment im Brennkraftmaschinensteuergerät berücksichtigt. Dabei wird das Drehmoment der Brennkraftmaschine in Form einer Erhöhung des Drehmoments derart vorgesteuert, daß zumindest dieses Verlustmoment kompensiert wird. Hierdurch wird insbesondere bei einem Anfahrvorgang mit einem Automatikgetriebe der Komfort erhöht, da ein ungewollter Einbruch des Drehmoments der Brennkraftmaschine aufgrund der erhöhten Momentenanforderung frühzeitig verhindert wird. Das erfindungsgemäße Verfahren kann jedoch auch mit weiteren Verfahren zur Beeinflussung des Drehmoments einer Brennkraftmaschine in Abhängigkeit von anderen Kraftfahrzeugfunktionen zusammenwirken. Die Beeinflussung des Drehmoments der Brennkraftmaschine wird insbesondere durch die Veränderung der Einspritzmenge, der Luftmenge und/oder des Zündwinkels über das Brennkraftmaschinensteuergerät realisiert.

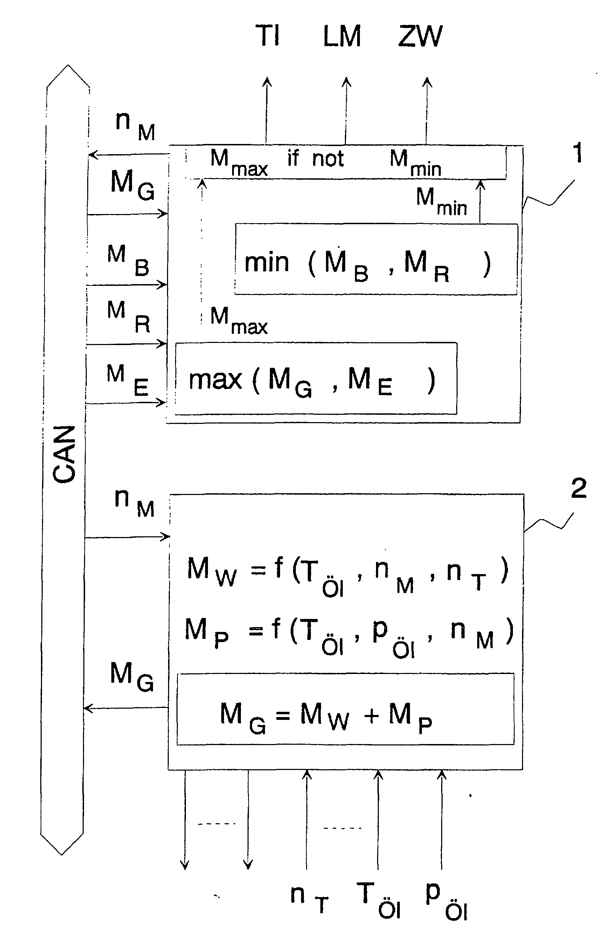

In der Zeichnung ist ein Ausführungsbeispiel der Erfindung dargestellt.

Es zeigt das Zusammenwirken und die Funktionsweise eines Brennkraftmaschinensteuergeräts und eines Getriebesteuergeräts, die beide über einen Datenbus verbunden sind.

An einem Datenbus CAN ist zum einen ein elektronisches Brennkraftmaschinensteuergerät 1 und zum anderen ein elektronisches Getriebesteuergerät 2 angeschlossen. Die Steuergeräte 1 und 2 können sowohl über die Datenbusleitung CAN als auch über weitere Eingänge Eingangssignale erhalten. Auch die Ausgangssignale der Steuergeräte 1 und 2 können sowohl über die Datenbusleitung CAN als auch über andere Ausgänge übermittelt werden.

Zur Beeinflussung des Drehmoments der Brennkraftmaschine weist das Brennkraftmaschinensteuergerät 1 drei Ausgänge auf, über die die Einspritzmenge TI, die Luftmenge LM und/oder der Zündwinkel ZW zum Erreichen eines gewünschten Drehmoments der Brennkraftmaschine entsprechend eingestellt werden können. Weiterhin gibt das Brennkraftmaschinensteuergerät 1 als Ausgangssignal die Brennkraftmaschinendrehzahl (Motordrehzahl) n_{M} auf den Datenbus CAN aus, die als Eingangssignal vom Getriebesteuergerät 2 empfangen wird. Die Brennkraftmaschinendrehzahl n_{M} ist identisch mit der Pumpendrehzahl des Wandlers.

Zur Beeinflussung des Drehmoment der Brennkraftmaschine, insbesondere zur Erhöhung des Drehmoments der Brennkraftmaschine zum Kompensieren des Getriebeeingangsmoments als Verlustmoment erhält das Brennkraftmaschinensteuergerät 1 insbesondere den Wert dieses Getriebeeingangsmoments M_{G}. Wird beispielsweise durch eine andere Kraftfahrzeugfunktion ein weiteres Moment M_{E} an das Brennkraftmaschinensteuergerät 1 übermittelt, um eine Erhöhung des Drehmoments der Brennkraftmaschine anzufordern, wird vorzugsweise eine Maximalauswahl der angeforderten Momentenerhöhungen getroffen, woraus sich ein Maximummoment Mₘₐₓ als Vorsteuerwert ergibt. Es ist jedoch auch möglich, daß weitere Kraftfahrzeugsysteme Anforderungen, M_{B} und M_{R}, zur Reduzierung des Drehmoments der Brennkraftmaschine an das Brennkraftmaschinensteuergerät 1 übermitteln, wonach aus diesen Reduzierungsanforderungen eine Minimalauswahl getroffen wird. Das sich hieraus ergebende Minimummoment Mₘᵢₙ wird in diesem Fall vorrangig eingestellt. Liegt jedoch keine Anforderung zur Reduzierung des Drehmoments der Brennkraftmaschine, z. B. in Form der Momente M_{B} und M_{R}, vor, wird das Maximummoment Mₘₐₓ eingestellt.

Das Getriebeeingangsmoment M_{G} wird im Getriebesteuergerät 2 als Summe des Wandlermoments M_{W} und des Getriebeölpumpenmoments M_{P} berechnet und auf den Datenbus CAN ausgegeben. Das Wandlermoment M_{W} wird in Abhängigkeit von der Getrieböltemperatur T_{Öl}, der Brennkraftmaschinendrehzahl n_{M} bzw. der Pumpendrehzahl des Wandlers und der Turbinendrehzahl n_{T} ermittelt. Ergänzend wird darauf hingewiesen, daß das Wandlermoment M_{W} beim Stand der Technik im Brennkraftmaschinensteuergerät 1 lediglich geschätzt wird, da dem Brennkraftmaschinensteuergerät 1 die Turbinendrehzahl n_{T} des Wandlers nicht als Eingangssignal vorliegt. Weiterhin wird das ohnehin mit Rechenzeit stark belastete Brennkraftmaschinensteuergerät 1 durch die Erfindung entlastet, da die Berechnung des Wandlermoments nunmehr im Getriebesteuergerät 2 vorgenommen wird.

Darüber hinaus wird im Getriebesteuergerät 2 das Getriebeölpumpenmoment M_{P} in Abhängigkeit von der Getriebeöltemperatur T_{Öl}, dem Getriebeölpumpendruck p_{Öl} und der Motordrehzahl n_{M} ermittelt. Die Motordrehzahl n_{M} ist gleich der Drehzahl der Getriebeölpumpe. Das Getriebeölpumpenmoment M_{P} wird beim Stand der Technik bisher nicht berücksichtigt. Demnach wird durch die Berechnung des Getriebeeingangsmoments M_{G} als Summe des Wandlermoments M_{W} und des Getriebeölpumpenmoments M_{P} zur Bestimmung des durch die Beeinflussung des Drehmoments der Brennkraftmaschine zu kompensierenden Verlustmoments eine höhere Genauigkeit und damit ein höherer Fahrkomfort erreicht.

## Patentansprüche

1. Verfahren zur Beeinflussung des Drehmoments einer Brennkraftmaschine bei einem Kraftfahrzeug
- mit einem automatischen Stufengetriebe,
- mit einem hydrodynamischen Wandler,
- mit einer Getriebeölpumpe,
- mit einem elektronischen Brennkraftmaschinensteuergerät (1) und
- mit einem elektronischen Getriebesteuergerät (2),
- wobei das Getriebesteuergerät (2) in Abhängigkeit von ihm vorliegenden Eingangssignalen (n_{T}, T_{Öl}, n_{M}) ein Getriebeeingangsmoment (M_{G}) unter Berücksichtigung eines Wandlermoments (M_{W}) ermittelt und dieses Getriebeeingangsmoment (M_{G}) in Form eines durch das Brennkraftmaschinensteuergerät (1) zu kompensierenden Verlustmoments als Eingangssignal an das Brennkraftmaschinensteuergerät (1) übermittelt,
**dadurch gekennzeichnet, daß**
- das Getriebesteuergerät (2) das Getriebeeingangsmoment (M_{G}) als Summe des Wandlermoments (M_{W}) und eines Getriebeölpumpenmoments (M_{P}) ermittelt,
- wobei das Getriebeölpumpenmoment (M_{P}) in Abhängigkeit des Getriebeölpumpendrucks (p_{Öl}), der Getriebeöltemperatur (T_{Öl}) und der Drehzahl der Getriebeölpumpe ermittelt wird.

## Claims

1. A method for the regulation of the torque of an internal combustion engine in a motor vehicle comprising
- an automatic stepping gearbox,
- a hydrodynamic torque converter,
- a gearbox oil pump,
- an electronic internal combustion engine control unit (1) and
- an electronic gearbox control unit (2),
- in which the gearbox control unit (2) determines a gearbox input torque (M_{G}) depending upon input signals (n_{T}, T_{Öl}, n_{M}) applied to it taking account of the torque converter torque (M_{W}) and transmits this gearbox input torque (M_{G}) in the form of a loss torque to be compensated by the internal combustion engine control unit (1) as an input signal to the internal combustion engine control unit (1),
**characterised in that**
- the gearbox control unit (2) determines the gearbox input torque (M_{G}) as the sum of the torque converter torque (M_{W}) and the gearbox oil pump torque (M_{P}),
- in which the gearbox oil pump torque (M_{P}), is determined in dependency upon the gearbox oil pump pressure (P_{Öl}), the gearbox oil temperature (T_{Öl}) and the revolutions of the gearbox oil pump.

## Revendications

1. Procédé pour influencer le couple fourni par un moteur à combustion interne d'un véhicule automobile, comprenant :
- une boîte de vitesses automatique,
- un convertisseur hydrodynamique de couple,
- une pompe à huile de boîte de vitesses,
- un appareil de commande électronique de moteur (1) et
- un appareil de commande électronique de boîte de vitesses (2), l'appareil de commande de boîte de vitesse (2) déterminant un couple d'entrée de boîte de vitesses (M_{G}) en fonction des signaux d'entrée (n_{T}, T_{h,} n_{M}) qu'il reçoit et en tenant compte d'un couple de convertisseur (M_{W}), et transmettant ce couple d'entrée de boîte de vitesses (M_{G}) sous la forme d'un couple perdu que doit compenser l'appareil de commande (1) du moteur comme signal d'entrée à cet appareil de commande de moteur (1),
**caractérisé en ce que**
l'appareil de commande de boîte de vitesses (2) détermine le couple d'entrée (M_{G}) de la boîte de vitesses comme somme du couple de convertisseur (M_{W}) et d'un couple de pompe à huile de boîte de vitesses (M_{P}), le couple (M_{P}) de la pompe à huile de la boîte de vitesses se déterminant en fonction de la pression de la pompe à huile (Pₕ) de la boîte de vitesses, de la température (Tₕ) de l'huile de la boîte de vitesses et de la vitesse de rotation de la pompe à huile de la boîte de vitesses.
